# NEUE EUROPÄISCHE PATENTSCHRIFT

(11) **EP 1 054 517 B2**
(45) Veröffentlichungstag und Bekanntmachung des Hinweises auf die Entscheidung über den Einspruch: **26.12.2018**
(45) Hinweis auf die Patenterteilung: 20.07.2005
(21) Anmeldenummer: 00109142.0
(22) Anmeldetag: 05.05.2000
(51) Int. Cl.: H04W 52/22, H04W 52/36

(54) **Verfahren und Vorrichtung zur Leistungsregelung eines Senders**
Method and apparatus for controlling the power of a transmitter
Procédé et appareil de contrôle de la puissance d'un émetteur

(30) Priorität: 21.05.1999 DE 19923580
(43) Veröffentlichungstag der Anmeldung: 22.11.2000
(73) Patentinhaber: IPCom GmbH & Co. KG, 82049 Pullach (DE)
(72) Erfinder: Kowalewski, Frank, 38228 Salzgitter (DE); Heynhold Karsten, 42289 Wuppertal (DE); Schulz, Holger, 14059 Berlin (DE)
(74) Vertreter: Molnia, David

(56) Entgegenhaltungen:
- EP-A- 0 717 508
- US-A- 5 669 066
- US-A- 5 774 785

## Beschreibung

### Stand der Technik

Die Erfindung geht von einem Verfahren und von einer Vorrichtung zur Leistungsregelung eines Senders nach der Gattung der unabhängigen Ansprüche aus.

Aus der Veröffentlichung "Nachrichtenübertragung", D. Kammeyer, B.G. Teubner, Stuttgart 1996 ist bereits ein Verfahren zur Leistungsregelung einer Sendestation bekannt, deren Sendeleistungspegel in Abhängigkeit der Qualität eines bestehenden Übertragungskanals und des für die Übertragung in diesem Übertragungskanal zuletzt gewählten Sendeleistungspegels eingestellt wird. Dabei findet ein Vergleich des zu einem ersten zurückliegenden Zeitpunkt zuletzt gewählten Sendeleistungspegels mit der zu diesem Zeitpunkt vorliegenden Qualität des Übertragungskanals, beispielsweise eines zu diesem Zeitpunkt in der empfangenden Gegenstation ermittelten Empfangsleistungspegels, statt. Aus der Differenz des zuletzt gewählten Sendeleistungspegels und des ermittelten Empfangsleistungspegels wird dann die Regelungsrichtung und die Differenz zwischen dem einzustellenden Sendeleistungspegel und dem zuletzt gewählten Sendeleistungspegel bestimmt. Die Differenz wird dabei so bestimmt, daß die Sendeleistung möglichst schnell an die zum ersten zurückliegenden Zeitpunkt ermittelte Qualität des Übertragungskanals angepaßt wird.
Aus der Veröffentlichung C.-C. Lee & R. Steele, "Closed-loop power control in CDMA systems", IEE Proc. -Commun., Vol. 143, No. 4, pp. 231-239, August 1996 ist ein Verfahren zur Leistungsregelung einer Sendestation bekannt, das entsprechend einem Bitmustervergleich die Differenz zwischen dem zuletzt gewählten Sendeleistungspegel und dem ermittelten Empfangsleistungspegel einstellt.
Aus der WO 98/09384 A ist ein Verfahren zur Leistungsregelung einer Sendestation bekannt, das die Schrittgröße der Sendeleistungsregelung in Abhängigkeit der Geschwindigkeit des Mobiltelefons einstellt.
Aus der WO 97/26716 A ist ein Verfahren zur Regelung der Sendeleistung der Funkgeräte und ein Funksystem bekannt.

### Vorteile der Erfindung

Das erfindungsgemäße Verfahren mit den Merkmalen des Hauptanspruchs hat demgegenüber den Vorteil, daß die Differenz zwischen dem einzustellenden Sendeleistungspegel und dem zuletzt gewählten Sendeleistungspegel in Abhängigkeit der Änderung der Qualität des Übertragungskanals gebildet wird. Auf diese Weise wird bei der Einstellung des Sendeleistungspegels nicht nur die zum ersten zurückliegenden Zeitpunkt ermittelte Qualität des Übertragungskanals, sondern mindestens ein weiterer, noch länger zurückliegender Qualitätswert berücksichtigt, so daß nicht nur eine Anpassung des Sendeleistungspegels an die zum ersten zurückliegenden Zeitpunkt ermittelte Qualität des Übertragungskanals, sondern auch an die für einen nachfolgenden Zeitpunkt zu erwartende Qualität des Übertragungskanals bewirkt wird. Durch Berücksichtigung der Qualität des Übertragungskanals zu mehreren zurückliegenden Zeitpunkten wird somit ein Selbstlerneffekt erzeugt, der eine Vorhersage für die Qualität des Übertragungskanals und somit eine bessere Anpassung des Sendeleistungspegels an den zeitlichen Verlauf dieser Qualität ermöglicht. Dies ist besonders dann von Vorteil, wenn sich die Qualität des Übertragungskanals sehr schnell mit der Zeit ändert. Eine Anpassung des Sendeleistungspegels an die sich schnell ändernde Qualität des Übertragungskanals ist dann nur möglich, wenn diese Änderungen bekannt sind und bei der Einstellung des Sendeleistungspegels berücksichtigt werden. Wird jedoch nur der zum ersten zurückliegenden Zeitpunkt ermittelte Qualitätswert des Übertragungskanals für die Einstellung des Sendeleistungspegels berücksichtigt, so können eventuelle starke Änderungen der Qualität des Übertragungskanals nicht berücksichtigt werden.

Des Weiteren wird zumindest die Differenz zwischen dem aktuell einzustellenden Sendeleistungspegel und dem zuletzt gewählten Sendeleistungspegel nach einer Änderung der Richtung der Leistungsregelung gegenüber der zuvor gewählten Differenz vergrößert, wenn sich die Richtung der Leistungsregelung zuvor für eine vorgegebene Zeit nicht geändert hat. Auf diese Weise wird bei einer zeitlich langsam sich ändernden Qualität des Übertragungskanals eine detektierte Änderung der Richtung der Leistungsregelung dahingehend ausgenutzt, auch für diese zeitlich langsame Änderung der Qualität eine schnellere Anpassung des Sendeleistungspegels an die Qualität des Übertragungskanals zu erzielen.

Ferner wird die Differenz zwischen dem einzustellenden Sendeleistungspegel und dem zuletzt gewählten Sendeleistungspegel umso größer gewählt, je länger die vorgegebene Zeit ist. Auf diese Weise kann der Sendeleistungspegel noch schneller an eine sich nur langsam mit der Zeit ändernde Qualität des Übertragungskanals angepaßt werden.

Durch die in den Unteransprüchen aufgeführten Maßnahmen sind vorteilhafte Weiterbildungen und Verbesserungen des Verfahrens und der Vorrichtung gemäß der unabhängigen Ansprüche möglich.

Für den Fall großer zeitlicher Änderungen der Qualität des Übertragungskanals ist eine Vorhersage für den zukünftigen Verlauf der Qualität besonders schwierig, so daß das Risiko einer Fehlanpassung des Sendeleistungspegels an die Qualität des Übertragungskanals durch möglichst geringfügige Änderungen des Sendeleistungspegels verringert wird.

Größere Änderungen zeitlich benachbarter Sendeleistungspegel sind hingegen vorteilhaft, wenn sich die Qualität des Übertragungskanals zeitlich weder zu stark noch zu schwach ändert, so daß in diesem Bereich der Änderung der Qualität eine möglichst schnelle Anpassung des Sendeleistungspegels an die Qualität erreicht werden kann.

Besonders vorteilhaft ist es, daß die Differenz zwischen dem einzustellenden Sendeleistungspegel und dem zuletzt gewählten Sendeleistungspegel umso kleiner gewählt wird, je häufiger sich die Richtung der Leistungsregelung ändert. Auf diese Weise wird bei häufiger Änderung der Richtung der Leistungsregelung eine Fehlanpassung des einzustellenden Sendeleistungspegels an die Qualität des Übertragungskanals ebenfalls weitgehend ausgeschlossen.

Wenn sich die Richtung der Leistungsregelung jedoch seltener ändert, kann die Differenz zwischen dem einzustellenden Sendeleistungspegel und dem zuletzt gewählten Sendeleistungspegel umso größer gewählt werden, so daß der Vorteil bewirkt wird, den Sendeleistungspegel möglichst schnell an die Qualität des Übertragungskanals anzupassen.

### Zeichnung

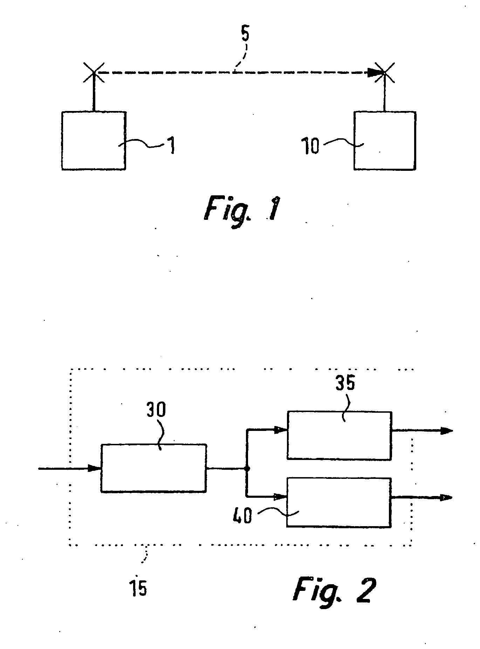

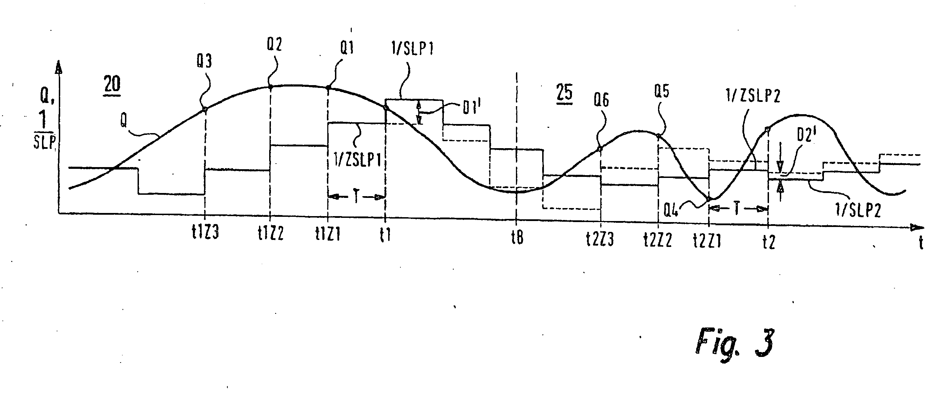

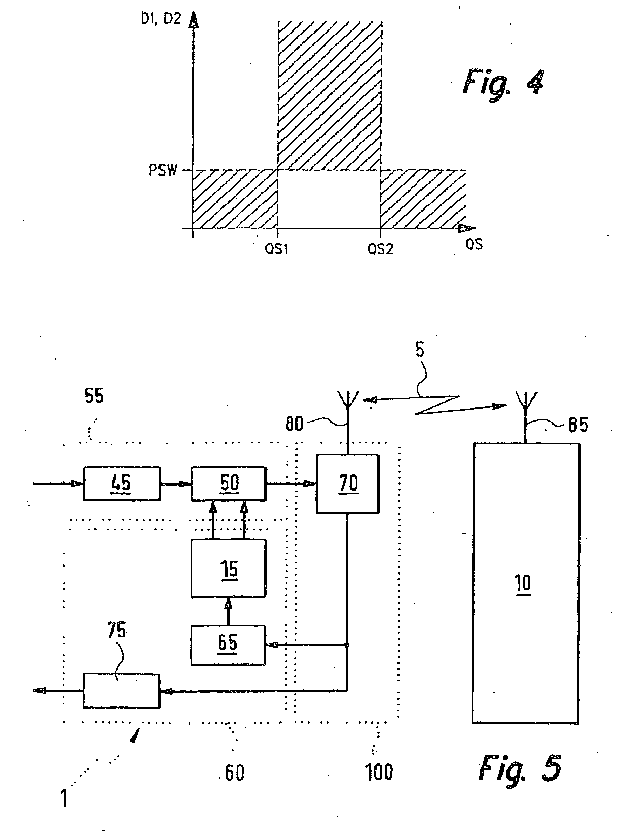

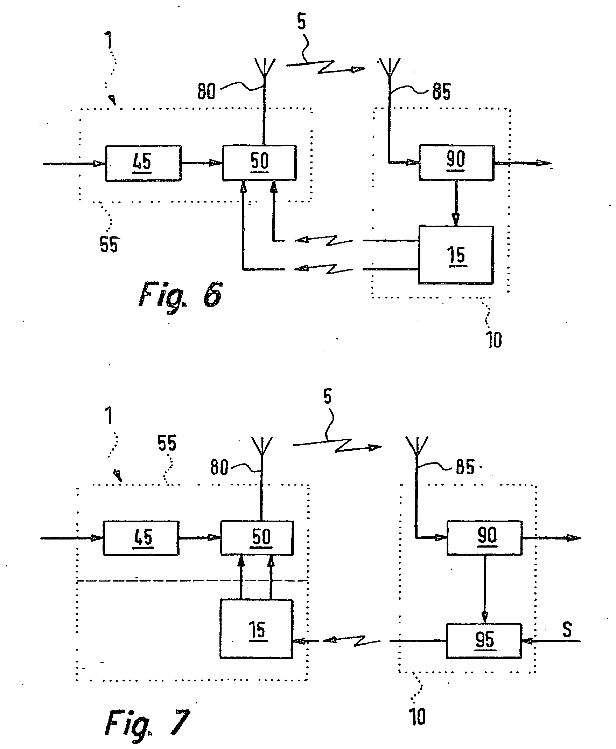

Ausführungsbeispiele der Erfindung sind in der Zeichnung dargestellt und in der nachfolgenden Beschreibung näher erläutert. Es zeigen Figur 1 ein Übertragungssystem mit einem Sender und einem Empfänger, Figur 2 ein Blockschaltbild für eine Leistungsregelungsparameterbestimmung, Figur 3 einen zeitlichen Verlauf einer Qualität eines Übertragungskanals und eines Kehrwerts eines Sendeleistungspegels, Figur 4 ein Leistungsregelungsbereichsdiagramm, Figur 5 eine erste Ausführungsform des Übertragungssystems nach Figur 1, Figur 6 eine zweite Ausführungsform des Übertragungssystems nach Figur 1 und Figur 7 eine dritte Ausführungsform des Übertragungssystems nach Figur 1.

### Beschreibung der Ausführungsbeispiele

In Figur 1 kennzeichnet 1 einen Sender und 10 einen Empfänger. Zwischen dem Sender 1 und dem Empfänger 10 ist ein Übertragungskanal 5 eingerichtet, über den Daten vom Sender 1 an den Empfänger 10 gesendet werden. Die Übertragungseigenschaften und damit die Qualität Q des Übertragungskanals 5 ändert sich dabei mit der Zeit, was beispielsweise durch eine Relativbewegung zwischen Sender 1 und Empfänger 10 bewirkt wird. Bei dem Sender 1 kann es sich beispielsweise um eine ortsfeste Basisstation eines Mobilfunknetzes und beim Empfänger 10 um ein Mobilfunkgerät handeln, das sich in einer von der Basisstation aufgespannten Funkzelle bewegt.

In Figur 3 ist ein Beispiel für einen Verlauf der Qualität Q des Übertragungskanals 5 sowie des Kehrwertes 1/SLP des Sendeleistungspegels SLP des Senders 1 über der Zeit t dargestellt. Das Diagramm gemäß Figur 3 ist dabei mittels einer Begrenzungszeit tB in einen ersten Bereich 20 für Zeitpunkte t < tB und einen zweiten Bereich 25 für Zeitpunkte t > tB aufgeteilt, wobei der erste Bereich 20 und der zweite Bereich 25 ungefähr gleiche Zeitdauer aufweisen. Im ersten Bereich 20 ändert sich der zeitliche Verlauf der Qualität Q des Übertragungskanals vergleichsweise langsam, indem er dort eine etwa sinusförmige Halbwelle mit einem Maximum bildet. Im zweiten Bereich 25 hingegen weist der zeitliche Verlauf der Qualität Q zwei etwa sinusförmige Vollwellen auf und ändert sich somit im zweiten Bereich 25 vergleichsweise schnell.

Bei dem Übertragungskanal 5 kann es sich beispielsweise um eine Zeitschlitz-Funkverbindung nach dem TDD-Verfahren (Time Division Duplex) handeln. Der Übertragungskanal 5 kann dabei bidirektional verwendet werden, wobei jeweils ein Zeitschlitz für die Übertragungsrichtung vom Sender 1 zum Empfänger 10 und ein Zeitschlitz für die Übertragung vom Empfänger 10 zum Sender 1 vorgesehen ist. Gemäß Figur 1 ist nur die Übertragungsrichtung vom Sender 1 zum Empfänger 10 dargestellt. Die Rückübertragung vom Empfänger 10 zum Sender 1 ist zur Beschreibung des erfindungsgemäßen Verfahrens lediglich wegen der Ermittlung bzw. Übermittlung der Qualität Q von Interesse, kann aber selbstverständlich genauso zur Nutzdatenübertragung vorgesehen sein, wie die Übertragungsrichtung vom Sender 1 zum Empfänger 10. Der Empfänger 10 kann somit neben einer Empfangs- auch eine Sendevorrichtung umfassen und der Sender 1 kann neben einer Sende- auch eine Empfangsvorrichtung umfassen. Bei der Qualität Q soll es sich jedoch im folgenden um die Qualität des Übertragungskanals 5 vom Sender 1 zum Empfänger 10 handeln. In einem zeitlichen Abstand T, der auch der Breite eines Zeitschlitzes entsprechen kann, wird jeweils ein neuer Sendeleistungspegel SLP in Abhängigkeit der Qualität Q des Übertragungskanals 5 und des für die Übertragung in diesem Übertragungskanal 5 zuletzt gewählten Sendeleistungspegels ZSLP eingestellt. Dies soll für den ersten Bereich 20 beispielhaft für die Einstellung eines ersten Sendeleistungspegels SLP1 zu einem ersten Einstellzeitpunkt t1 und für den zweiten Bereich 25 für die Einstellung eines zweiten Sendeleistungspegels SLP2 zu einem zweiten Einstellzeitpunkt t2 näher erläutert werden.

Dabei ist es das Ziel, den Verlauf des Sendeleistungspegels SLP so an den Verlauf der Qualität Q anzupassen, daß im Empfänger 10 eine möglichst konstante Empfangsleistung vorliegt. Das bedeutet, daß bei Verschlechterung der Qualität Q der Sendeleistungspegel SLP vergrößert und bei Verbesserung der Qualität Q der Sendeleistungspegel SLP verringert werden muß. Bezogen auf den Kehrwert 1/SLP des Sendeleistungspegels SLP bedeutet dies, daß der Verlauf dieses Kehrwerts in seiner Form möglichst an den Verlauf der Qualität Q über der Zeit t angepaßt werden muß.

Im ersten Bereich 20 ist der um den zeitlichen Abstand T vor dem ersten Einstellzeitpunkt t1 zu einem ersten zurückliegenden Zeitpunkt t1Z1 vorliegende
Kehrwert 1/ZSLP1 des gegenüber dem ersten Einstellzeitpunkt t1 zuletzt gewählten Sendeleistungspegels ZSLP1 kleiner als der zum ersten zurückliegenden Zeitpunkt t1Z1 ermittelte erste Qualitätswert Q1 des Verlaufs Q des Übertragungskanals 5. In einem ersten Schritt wird nun der zuletzt gewählte Sendeleistungspegel ZSLP1 in Form seines Kehrwertes 1/ZSLP1 mit dem ersten Qualitätswert Q1 verglichen. Aus diesem Vergleich wird die Richtung für die Änderung des zum ersten Einstellzeitpunkt t1 einzustellenden Sendeleistungspegels SLP1 beziehungsweise dessen Kehrwert 1/SLP1 ermittelt. Der zum ersten Einstellzeitpunkt t1 einzustellende Sendeleistungspegel SLP1 muß also verringert werden, damit sein Kehrwert 1/SLP1 größer und somit an den zeitlichen Verlauf der Qualität Q angepaßt wird.

In einem zweiten Schritt wird auch ein zweiter zu einem zweiten zurückliegenden Zeitpunkt t1Z2, der dem ersten zurückliegenden Zeitpunkt t1Z1 um den zeitlichen Abstand T vorauseilt, vorliegender Qualitätswert Q2 des Verlaufs der Qualität Q ermittelt und mit dem ersten Qualitätswert Q1 verglichen. Aus dem Vergleichsergebnis wird eine Differenz D1 zwischen dem zum ersten Einstellzeitpunkt t1 einzustellenden Sendeleistungspegel SLP1 und dem zuletzt gewählten Sendeleistungspegel ZSLP1 beziehungsweise eine Differenz D1' zwischen dem Kehrwert 1/SLP1 des zum ersten Einstellzeitpunkt t1 einzustellenden Sendeleistungspegels SLP1 und dem Kehrwert 1/ZSLP1 des zuletzt gewählten Sendeleistungspegels ZSLP1 ermittelt. Als Grundlage für die Ermittlung dieser Differenz D1' zwischen den beiden Kehrwerten können gegebenenfalls auch noch ein dritter Qualitätswert Q3 der Qualität Q des Übertragungskanals 5 zu einem dritten zurückliegenden Zeitpunkt t1Z3, der gegenüber dem zweiten zurückliegenden Zeitpunkt t1Z2 um den zeitlichen Abstand T vorauseilt, sowie gegebenenfalls noch früher ermittelte Qualitätswerte verwendet werden. Aus dem zeitlichen Verlauf dieser Qualitätswerte kann dann eine Wahrscheinlichkeit für den weiteren Verlauf der Qualität Q zumindest für den ersten Einstellzeitpunkt t1 ermittelt und die entsprechende Differenz D1' zur Anpassung des Kehrwerts 1/SLP des Sendeleistungspegels SLP an den Verlauf der Qualität Q bestimmt werden. Der Kehrwert 1/SLP1 des zum ersten Einstellzeitpunkt t1 einzustellenden Sendeleistungspegels SLP1 geht dann aus dem Kehrwert 1/ZSLP1 des zuletzt gewählten Sendeleistungspegels ZSLP1 hervor, indem der Kehrwert 1/ZSLP1 des zuletzt gewählten Sendeleistungspegels ZSLP1 in die beim ersten Schritt ermittelte Regelungsrichtung um die Differenz D1' der Kehrwerte vergrößert oder verkleinert wird. Gemäß Figur 3 findet eine Vergrößerung des Kehrwerts 1/ZSLP1 des zuletzt gewählten Sendeleistungspegels ZSLP1 um die ermittelte Differenz D1' der Kehrwerte auf den Kehrwert 1/SLP1 des für den ersten Einstellzeitpunkt t1 zu ermittelnden Sendeleistungspegels SLP1 statt. Bei zunehmender Differenz D1' zwischen den Kehrwerten der Sendeleistungspegel vergrößert sich auch die Differenz D1 zwischen den Sendeleistungspegeln selbst. Bei abnehmender Differenz D1' zwischen den Kehrwerten der Sendeleistungspegel verringert sich auch die Differenz D1 zwischen den Sendeleistungspegeln selbst.

Da sich im ersten Bereich 20 der Verlauf der Qualität Q mit der Zeit nur vergleichsweise wenig ändert, sind die Differenzen der Kehrwerte der Sendeleistungspegel SLP in diesem Bereich nicht allzu groß gewählt, um die Schwankungsbreite des Verlaufs des Kehrwerts 1/SLP der Sendeleistungspegel SLP in diesem Bereich möglichst gering zu halten. Dies führt jedoch dazu, daß das Maximum des Verlaufs des Kehrwerts 1/SLP im ersten Bereich 20 sein Maximum erst zwei zeitliche Abstände T nach dem Maximum des Verlaufs der Qualität Q erreicht. Diese Verzögerung des Kehrwerts 1/SLP der Sendeleistungspegel SLP gegenüber dem Verlauf der Qualität Q setzt sich auch bei nachlassender Qualität Q für Zeiten t > t1 fort. Wertet man jedoch zusätzlich noch die Richtung der Leistungsregelung zumindest zum ersten zurückliegenden Zeitpunkt t1Z1 und zum zweiten zurückliegenden Zeitpunkt t1Z2 aus, so stellt man fest, daß die Richtung der Leistungsregelung nicht verändert wurde. Dies ist ein Indiz für eine nur langsame Änderung der Qualität Q mit der Zeit sowie einer verzögerten Nachführung der Kehrwerte 1/SLP der Sendeleistungspegel SLP. Sobald für einen Zeitpunkt t > t1 eine Änderung der Richtung der Leistungsregelung detektiert wird, kann die Differenz der Kehrwerte 1/SLP der Sendeleistungspegel SLP für einen oder mehrere nachfolgende Regelschritte vergrößert werden, um eine schnellere Anpassung des Verlaufs der Kehrwerte 1/SLP der Sendeleistungspegel SLP an den Verlauf der Qualität Q zu erzielen. Dies ist in Figur 3 durch den gestrichelten Verlauf der Kehrwerte 1/SLP der Sendeleistungspegel SLP dargestellt, wobei der Verlauf des Kehrwerts 1/SLP der Sendeleistungspegel SLP im Bereich der Begrenzungszeit tB den Verlauf der Qualität Q bis auf einen zeitlichen Abstand T einholt.

Berücksichtigt man zusätzlich noch die Richtung der Leistungsregelung zum dritten zurückliegenden Zeitpunkt t1Z3, so stellt man fest, daß in drei aufeinander folgenden Regelungsschritten die Richtung der Leistungsregelung nicht geändert wurde. Je länger die Richtung der Leistungsregelung nicht geändert wurde, desto größer kann nach einer detektierten Änderung der Richtung der Leistungsregelung die Differenz zwischen den Kehrwerten der Sendeleistungspegel SLP gewählt werden, um ein zu starkes Nacheilen des Verlaufs des Kehrwerts 1/SLP der Sendeleistungspegel SLP im Vergleich zum Verlauf der Qualität Q aufzuholen.

Zu einem zweiten Einstellzeitpunkt t2 im zweiten Bereich 25 des Diagramms nach Figur 3 soll ein weiterer Kehrwert 1/SLP2 eines weiteren Sendeleistungspegels SLP2 ausgehend von einem Kehrwert 1/ZSLP2 eines zuletzt gewählten Sendeleistungspegels ZSLP2 eingestellt werden. Zu einem ersten zurückliegenden Zeitpunkt t2Z1, der gegenüber dem zweiten Einstellzeitpunkt t2 um den zeitlichen Abstand T vorauseilt, wurde für den Kehrwert 1/ZSLP2 des zuletzt gewählten Sendeleistungspegels ZSLP2 ein Wert ermittelt, der oberhalb eines zu diesem Zeitpunkt vorliegenden vierten Qualitätswertes Q4 der Qualität Q des Übertragungskanals 5 liegt. Damit ergibt sich für die Richtung der Leistungsregelung für den zweiten Einstellzeitpunkt t2 eine Verkleinerung des Kehrwerts 1/SLP2 des einzustellenden Sendeleistungspegels SLP2. Zu einem zweiten zurückliegenden Zeitpunkt t2Z2, der gegenüber dem zweiten Einstellzeitpunkt t2 um zwei zeitliche Abstände T vorauseilt, wird ein fünfter Qualitätswert Q5 der Qualität Q ermittelt, der vom vierten Qualitätswert Q4 erheblich abweicht. Wird auch noch ein sechster Qualitätswert Q6 zu einem dritten zurückliegenden Zeitpunkt t2Z3 ermittelt, der gegenüber dem zweiten Einstellzeitpunkt t2 um drei zeitliche Abstände T vorauseilt, so ergibt ein vom vierten Qualitätswert Q4 und vom fünften Qualitätswert Q5 wiederum abweichender Qualitätswert. Dem zweiten Einstellzeitpunkt t2 geht also eine im Vergleich zum ersten Bereich 20 große Änderung des Verlaufs der Qualität Q voraus, so daß zwischen dem Kehrwert 1/SLP2 des zum zweiten Einstellzeitpunkt t2 einzustellenden Sendeleistungspegels SLP2 und dem Kehrwert 1/ZSLP2 des entsprechend zuletzt gewählten Sendeleistungspegels ZSLP2 eine vergleichsweise kleine Differenz D2' gewählt wird, um den Kehrwert 1/ZSLP2 des zuletzt gewählten Sendeleistungspegels ZSLP2 um diese Differenz zum zweiten Einstellzeitpunkt t2 zu reduzieren. Gemäß Figur 3 ist erkennbar, daß durch diese Reduzierung der Verlauf des Kehrwerts 1/SLP gegenüber dem Verlauf der Qualität Q gegenphasig wird. Dies resultiert aus dem gewählten zeitlichen Abstand T zwischen den einzelnen Regelungsschritten, der gegenüber den Änderungen des Verlaufs der Qualität Q im zweiten Bereich 25 zu groß gewählt ist. Um dennoch das Ausmaß einer solchen Fehlanpassung möglichst gering zu halten, wird die Differenz D2' zwischen den Kehrwerten möglichst gering gewählt.

Im zweiten Bereich 25 stellt man für den ersten zurückliegenden Zeitpunkt t2Z1 und den zweiten zurückliegenden Zeitpunkt t2Z2 unterschiedliche Richtungen für die Leistungsregelung fest. Auch dies ist ein Zeichen für starke Änderungen im Verlauf der Qualität Q, das dahingehend ausgewertet werden kann, die Differenz D2' der Kehrwerte möglichst gering zu wählen, um das Ausmaß von Fehlanpassungen zwischen dem Kehrwert 1/SLP der Sendeleistungspegel SLP und dem Verlauf der Qualität Q möglichst zu verringern. Generell kann dabei die Differenz zwischen den Kehrwerten umso kleiner gewählt werden, je häufiger sich zuvor die Richtung der Leistungsregelung geändert hat.

Gemäß Figur 3 sind die Differenzen zwischen aufeinander folgenden Kehrwerten 1/SLP im ersten Bereich 20 größer als dies im zweiten Bereich 25 der Fall ist. Aufgrund der vergleichsweise langsamen Änderung des Verlaufs der Qualität Q im ersten Bereich 20 kommt es im ersten Bereich 20 stärker auf die Anpassung des Verlaufs des Kehrwerts 1/SLP an den Verlauf der Qualität Q an. Im zweiten Bereich 25 kommt es hingegen stärker auf die Verringerung der Fehlanpassung zwischen dem Verlauf des Kehrwerts 1/SLP im Vergleich zum Verlauf der Qualität Q an.

Im ersten Bereich 20 kann für die Ermittlung der Differenz zwischen den Kehrwerten 1/SLP der Sendeleistungspegel SLP noch die Tatsache ausgenutzt werden, daß sich im ersten Bereich 20 die Richtung der Leistungsregelung im Vergleich zum zweiten Bereich 25 seltener ändert. Auch dies ist ein Zeichen dafür, daß es im ersten Bereich 20 weniger auf die Vermeidung von Fehlanpassung ankommt, so daß die Differenzen zwischen den Kehrwerten 1/SLP der Sendeleistungspegel aufeinanderfolgender Regelschritte im ersten Bereich 20 größer als im zweiten Bereich 25 gewählt werden können, um eine schnellere Anpassung des Verlaufs der Kehrwerte 1/SLP der Sendeleistungspegel SLP an den Verlauf der Qualität Q zu erreichen.

Generell kann daher gesagt werden, dass die Differenzen zwischen Kehrwerten 1/SLP von Sendeleistungspegeln SLP aufeinanderfolgender Regelungsschritte umso größer gewählt wird, je länger sich die Richtung der Leistungsregelung zuvor nicht geändert hat.

Die Differenz der Kehrwerte aufeinanderfolgender Sendeleistungspegel wird also in Abhängigkeit der Größe der Änderung des bei vorhergehenden Regelungsschritten gemessenen Verlaufs der Qualität Q und in Abhängigkeit der Änderung der Richtung der Leistungsregelung bei vorhergehenden Regelungsschritten bestimmt werden.

Bei Bestimmung dieser Differenz D1', D2' der Kehrwerte zeitlich aufeinanderfolgender Sendeleistungspegel in Abhängigkeit des zeitlichen Verlaufs der Qualität Q kann für die sich daraus ergebende Differenz D1, D2 zwischen den zeitlich aufeinanderfolgenden Sendeleistungspegeln selbst ein Schema gemäß Figur 4 vorgegeben sein. Im Diagramm gemäß Figur 4 ist-die Differenz D1, D2 zwischen zeitlich aufeinanderfolgenden Sendeleistungspegeln über der Änderung QS der Qualität Q aufgetragen. Die Differenz D1, D2 zwischen dem einzustellenden Sendeleistungspegel SLP1, SLP2 und dem entsprechend zuletzt gewählten Sendeleistungspegel ZSLP1, ZSLP2 wird dabei kleiner als ein vorgegebener Pegelschwellwert PSW gewählt, wenn die Änderung QS der Qualität Q eine erste vorgegebene Änderungsschwelle QS1 unterschreitet oder wenn die Änderung QS der Qualität Q eine zweite vorgegebene Änderungsschwelle QS2 überschreitet, wobei die zweite vorgegebene Änderungsschwelle QS2 größer als die erste vorgegebene Änderungsschwelle QS1 ist.

Befindet sich die Differenz D1, D2 zwischen dem einzustellenden Sendeleistungspegel SLP1, SLP2 und dem entsprechend zuletzt gewählten Sendeleistungspegel ZSLP1, ZSLP2 zwischen der ersten vorgegebenen Änderungsschwelle QS1 und der zweiten vorgegebenen Änderungsschwelle QS2, so wird die Differenz D1, D2 zwischen dem einzustellenden Sendeleistungspegel SLP1, SLP2 und dem entsprechend zuletzt gewählten Sendeleistungspegel ZSLP1, ZSLP2 größer als der vorgegebene Pegelschwellwert PSW gewählt. Die auszuwählenden Bereiche für die Differenz D1, D2 zwischen dem einzustellenden Sendeleistungspegel SLP1, SLP2 und dem entsprechend zuletzt gewählten Sendeleistungspegel ZSLP1, ZSLP2 sind im Diagramm der Figur 4 schraffiert dargestellt.

Figur 2 zeigt in einem Blockschaltbild ein Modul 15 zur Leistungsregelungsparameterbestimmung. Das Modul 15 zur Leistungsregelungsparameterbestimmung umfaßt einen Puffer 30, dem ein die Qualität Q des Übertragungskanals 5 charakterisierender Parameterzugeführt ist, der für mehrere vorhergehende Regelungsschritte ermittelt wurde und im Puffer 30 gespeichert ist. Die bei diesen vorhergehenden Regelungsschritten vom Modul 15 zur Leistungsregelungsparameterbestimmung eingestellten Sendeleistungspegel SLP sind im Modul 15 zur Leistungsregelungsparameterbestimmung ebenfalls gespeichert und somit bekannt. Der Puffer 30 ist einerseits mit Richtungsfestlegungsmitteln 35 und andererseits mit Differenzfestlegungsmitteln 40 verbunden. Die Richtungsfestlegungsmittel 35 ermitteln aus den im Puffer 30 gespeicherten Parameterwerten für die Qualität Q und den bekannten, zuvor eingestellten Sendeleistungspegeln die für den nächsten Regelungsschritt einzustellende Regelungsrichtung in der zuvor beschriebenen Weise. Die Differenzfestlegungsmittel 40 ermitteln aus den im Puffer 30 gespeicherten Parameterwerten für die Qualität Q und den bekannten, zuvor eingestellten Sendeleistungspegeln in der ebenfalls beschriebenen Weise den im aktuellen Regelungsschritt einzustellenden Sendeleistungspegel durch Bestimmung der Differenz zwischen dem aktuell einzustellenden Sendeleistungspegel und dem zuletzt gewählten Sendeleistungspegel beziehungsweise durch die Bestimmung der Differenz zwischen dem Kehrwert des im aktuellen Regelungsschritt einzustellenden Sendeleistungspegels und dem Kehrwert des zuletzt gewählten Sendeleistungspegels.

Das Modul 15 zur Leistungsregelungsparameterbestimmung steuert dann mit der für den aktuellen Regelungsschritt eingestellten Regelungsrichtung und der eingestellten Differenz zwischen dem einzustellenden Sendeleistungspegel und dem zuletzt gewählten Sendeleistungspegel eine in Figur 5 dargestellte Sendevorrichtung 55 des Senders 1 so an, daß der gewünschte Sendeleistungspegel für die Abstrahlung von Daten eingestellt wird, der sich in der ermittelten Regelungsrichtung und Differenz von dem im vorhergehenden Regelungsschritt eingestellten Sendeleistungspegel unterscheidet.

Das Modul 15 zur Leistungsregelungsparametorbestimmung umfaßt somit einen Eingang, über den der die Qualität Q des Übertragungskanals 5 charakterisierende Parameter zugeführt wird sowie je einen Ausgang zur Ausgabe der ermittelten Regelungsrichtung und der ermittelten Differenz D1, D2 zwischen dem einzustellenden Sendeleistungspegel SLP1, SLP2 und dem zuletzt gewählten Sendeleistungspegel ZSLP1, ZSLP2.

In Figur 5 ist ein erstes Ausführungsbeispiel für eine Realisierung des Senders 1 und des Empfängers 10 dargestellt. Der Sender 1 umfaßt dabei die Sendevorrichtung 55, eine Empfangsvorrichtung 60 und eine kombinierte Sende-/Empfangsvorrichtung 100. Die Sendevorrichtung 55 umfaßt einen Modulator 45, dem die zu sendenden Daten zugeführt sind und der mit einem Modul 50 zur Leistungsregelung in der Sendevorrichtung 55 verbunden ist. Das Modul zur Leistungsregelung 50 ist ausgangsseitig an einen Duplexer 70 der kombinierten Sende-/Empfangsvorrichtung 100 angeschlossen, der die Sende- und die Empfangsrichtung voneinandertrennt und an den eine Antenne 80 zur Abstrahlung der durch den Modulator 45 modulierten Daten mit einer durch das Modul 50 zur Leistungsregelung eingestellten Leistung angeschlossen ist. Die Daten werden dabei über den Übertragungskanal 5, welcher gemäß Figur5 einen Funkkanal, beispielsweise für eine TDD-Funkverbindung (Time Division Duplex), darstellt, an eine Antenne 85 des Empfängers 10 übertragen und im Empfänger 10 auf in Figur5 nicht dargestellte Weise weiterverarbeitet. Umgekehrt können über den Übertragungskanal 5 vom Empfänger 10 auch Daten an den Sender 1 übertragen werden, die dann über den Duplexer 70 einerseits einem Demodulator 75 und andererseits einem Modul 65 zur Schätzung der Funkverbindungsgüte in der Empfangsvorrichtung 60 des Senders 1 zugeführt werden. Der Demodulator 75 gibt die demodulierten Daten zur Weiterverarbeitung an in Figur 5 nicht dargestellte weitere Elemente des Senders 1 ab. Das Modul 65 zur Schätzung der Funkverbindungsgüte ermittelt den die Qualität Q charakterisierenden Parameter und gibt ihn an das Modul 15 zur Leistungsregelungsparameterbestimmung ab, wobei das Modul 15 zur Leistungsregelungsparameterbestimmung ebenfalls in der Empfangsvorrichtung 60 angeordnet ist. Die beiden Ausgänge des Moduls 15 zur Leistungsregelungsparameterbestimmung sind dann dem Modul 50 zur Leistungsregelung zugeführt. Die Leistung beim Empfang von Daten im Empfänger 10 wird dann beim Ausführungsbeispiel gemäß Figur 5 im Modul 65 zur Schätzung der Funkverbindungsgüte aus der Leistung der vom Empfänger 10 über die Antenne 80 des Senders 1 empfangenen Daten geschätzt, wobei diese Schätzung dann einen die Qualität Q charakterisierenden Parameter darstellt und dem Modul 15 zur Leistungsregeiungsparameterbestimmung zugeführt ist. Das Modul 50 zur Leistungsregelung stellt dann in Abhängigkeit der beiden Ausgangsgrößen des Moduls 15 zur Leistungsregelungsparameterbestimmung den nachfolgenden Sendeleistungspegel in der beschriebenen Weise ein, wobei dieser Sendeleistungspegel bei einer TDD-Funkverbindung im nächstfolgenden Zeitschlitz für die Übertragung vom Sender 1 zum Empfänger 10 verwendet wird.

In einem weiteren Ausführungsbeispiel nach Figur 6 kennzeichnen gleiche Bezugszeichen gleiche Elemente wie in Figur 5. Der Sender 1 umfaßt dabei lediglich die Sendevorrichtung 55 mit dem Modulator 45 und dem Modul 50 zur Leistungsregelung gemäß Figur 5, wobei die Antenne 80 des Senders 1 direkt mit Modul 50 zur Leistungsregelung verbunden ist. Während es sich beim Ausführungsbeispiel gemäß Figur 5 um eine sogenannte Open-Loop-Leistungsregelung handelt, bei der der Sender 1 Signale empfängt, aus denen er die Güte der Funkverbindung schätzt, um die Sendeleistung entsprechend zu regeln, handelt es sich beim Ausführungsbeispiel nach Figur 6 um eine sogenannte Closed-Loop-Leistungsregelung, bei der nun der Empfänger 10 die Güte der Funkverbindung schätzt und sie dem Sender 1 mitteilt. Dazu umfaßt der Empfänger 10 einen Demodulator 90, an den die Antenne 85 des Empfängers 10 angeschlossen ist, und der die vom Sender 1 empfangenen Daten demoduliert und zur Verarbeitung an in Figur 6 nicht dargestellte Einheiten des Empfängers 10 weiterleitet. Weiterhin ermittelt der Demodulator 90 des Empfängers 10 aus den vom Sender 1 empfangenen Daten einen Parameter, der die Qualität Q des Übertragungskanals 5 charakterisiert, beispielsweise die Empfangsleistung oder die Fehlerrate der im Demodulator 90 des Empfängers 10 detektierten Symbole. Auf diese Weise wird die Güte der Funkverbindung über den Übertragungskanal 5 im Empfänger 10 geschätzt. Der die Qualität Q des Übertragungskanals 5 charakterisierende und vom Demodulator 90 des Empfängers 10 ermittelte Parameter wird dann dem Modul 15 zur Leistungsregelungsparameterbestimmung zugeführt, das sich nun im Empfänger 10 befindet. Die beiden Ausgangsgrößen des Moduls 15 zur Leistungsregelungsparameterbestimmung werden dann beispielsweise ebenfalls über Funk oder optisch an das Modul 50 zur Leistungsregelung im Sender 1 übertragen. Das Modul 50 zur Leistungsregelung ermittelt dann in der beschriebenen Weise den als nächstes einzustellenden Sendeleistungspegel.

In einer weiteren Ausführungsform gemäß Figur 7 wird ebenfalls eine Closed-Loop-Leistungsregelung beschrieben, bei der der Empfänger 10 aus dem vom Sender 1 über den Übertragungskanal 5 empfangenen Funksignal einen Parameter zur Charakterisierung der Qualität Q des Übertragungskanal 5 ermittelt, wobei dieser Parameter die Güte der Funkverbindung beschreibt. Dabei kennzeichnen in Figur 7 gleiche Bezugszeichen gleiche Elemente wie in Figur 5 und Figur 6. Im Unterschied zum Ausführungsbeispiel nach Figur 6 und ausgehend von diesem umfaßt der Empfänger 10 gemäß dem Ausführungsbeispiel nach Figur 7 neben dem Demodulator 90 einen Vergleicher 95, dem der Parameter zur Charakterisierung der Qualität Q des Übertragungskanals 5 vom Demodulator 90 zugeführt ist. Dem Vergleicher 95 ist dabei außerdem ein Sollwert S zugeführt, der im Vergleicher 95 mit dem die Qualität Q charakterisierenden Parameter verglichen wird. Aus dem Vergleich wird ein Regelungskommando erzeugt, das die Sendeleistung des Senders 1 erhöhen soll, wenn eine durch den Sollwert S charakterisierte gewünschte Funkverbindungsgüte des Übertragungskanals 5 nicht erreicht wurde. Andernfalls, das heißt wenn die gewünschte Funkverbindungsgüte den Sollwert S überschreitet, erzeugt der Vergleicher 95 ein Regelungskommando, das die Sendeleistung des Senders 1 reduzieren soll. Das Regelungskommando wird dabei vom Vergleicher 95 des Empfängers 10 an den Sender 1 beispielsweise ebenfalls über Funk oder optisch abgesendet und als Eingangsgröße dem Modul 15 zur Leistungsregelungsparameterbestimmung zugeführt. Das Modul 15 zur Leistungsregelungsparameterbestimmung ist dabei also wieder im Sender 1 angeordnet. Dem Modul 15 zur Leistungsregelungsparameterbestimmung wird dabei also ein Parameter zur Charakterisierung der Qualität Q des Übertragungskanals 5 in Form eines Regelungskommandos zugeführt. Die beiden Ausgänge des Moduls 15 zur Leistungsregelungsparameterbestimmung sind dann in der beschriebenen Weise dem Modul 50 zur Leistungsregelung im Sender 1 zugeführt, wobei die Sendevorrichtung 55 beim Ausführungsbeispiel nach Figur 7 genauso aufgebaut ist, wie beim Ausführungsbeispiel nach Figur 6.

Beim Ausführungsbeispiel nach Figur 7 werden mehrere aufeinanderfolgende Regelkommandos im Puffer 30 gespeichert, beispielsweise über den Zeitraum von 100 ms. Aus den gespeicherten Werten wird eine Differenz zwischen zeitlich aufeinanderfolgenden einzustellenden Sendeleistungspegeln bestimmt, die im folgenden als Regelungsschrittweite bezeichnet wird, und die umso kleiner ist, je öfter aufeinanderfolgende Regelungskommandos verschieden sind. Zusätzlich kann vorgesehen sein, daß wenn nach einer längeren Folge von Regelungskommandos gleicher Regelungsrichtung zur Leistungserhöhung beziehungsweise zur Leistungsreduktion ein entgegengesetztes Regelungskommando folgt, die zuvor gewählte Regelungsschrittweite für den nachfolgend einzustellenden beziehungsweise für mehrere nachfolgend einzustellende gleichartige Regelungskommandos erhöht wird. Die Erhöhung der Regelungsschrittweite ist dabei abhängig von der Zahl der zuvor vom Modul 15 zur Leistungsregelungsparameterbestimmung empfangenen gleichartigen Regelungskommandos. Weiterhin kann auch vorgesehen sein, aus den im Puffer 30 gespeicherten aufeinanderfolgenden Regelungskommandos eine Referenz-Regelungsschrittweite zu bestimmen, die umso kleiner ist, je öfter aufeinanderfolgende Regelungskommandos verschieden sind. Darüber hinaus kann aus der Folge der Regelungskommandos eine Vorhersage über die Wahrscheinlichkeit dafür getroffen werden, daß ein Wechsel des Regelungskommandos folgen wird. Aus dieser Wahrscheinlichkeit wird jeweils eine Differenz zu der zuvor berechneten Referenz-Regelungsschrittweite bestimmt, wobei die Differenz zur Referenz-Regelungsschrittweite desto geringer ist, je großer die Wahrscheinlichkeit für den Wechsel des Regelungskommandos ist. Die Summe dieser Differenz und der Referenz-Regelungsschrittweite ist dann die im aktuellen Regelungsschritt einzustellende Regelungsschrittweite.

Der Ausgang der Richtungsfestlegungsmittel 35 entspricht dann dem vom Vergleicher 95 aktuell ermittelten und an den Sender 1 übertragenen Regelungskommando, da das - Regelungskommando nur die einzustellende Regelungsrichtung angibt, und der Ausgang der Differenzfestlegungsmittel 40 entspricht der ermittelten Regelungsschrittweite.

Aus diesen beiden Ausgangsgrößen des Moduls 15 zur Leistungsregelungsparameterbestimmung ermittelt dann das Modul 50 zur Leistungsregelung in der beschriebenen Weise den nachfolgend einzustellenden Sendeleistungspegel.

Der Sender 1 kann als Mobilfunkgerät, als Handfunkgerät, als Schnurlostelefon, als Mobiltelefon, als Betriebsfunkgerät oder dergleichen ausgebildet sein.

## Patentansprüche

1. Verfahren zur Leistungsregelung eines Senders (1), dessen Sendeleistungspegel (SLP1; SLP2) in Abhängigkeit der Qualität (Q) eines bestehenden Übertragungskanals (5) und des für die Übertragung in diesem Übertragungskanal (5) zuletzt gewählten Sendeleistungspegels (ZSLP1;ZSLP2) eingestellt wird, wobei die Differenz (D1; D2) zwischen dem einzustellenden Sendeleistungspegel (SLP1; SLP2) und dem zuletzt gewählten Sendeleistungspegel (ZSLP1; ZSLP2) in Abhängigkeit der Änderung der Qualität (Q) des Übertragungskanals (5) gebildet wird, **dadurch gekennzeichnet, daß** zumindest die Differenz (D1; D2) zwischen dem aktuell einzustellenden Sendeleistungspegel (SLP1; SLP2) und dem zuletzt gewählten Sendeleistungspegel (ZSLP1; ZSLP2) nach einer Änderung der Richtung der Leistungsregelung gegenüber der zuvor gewählten Differenz vergrößert wird, wenn sich die Richtung der Leistungsregelung zuvor für eine vorgegebene Zeit nicht geändert hat, und umso größer gewählt wird, je länger die vorgegebene Zeit ist.

2. Verfahren nach Anspruch 1, **dadurch gekennzeichnet, daß** aus einem Vergleich des zu einem ersten zurückliegenden Zeitpunkt (t1Z1; t2Z1) zuletzt gewählten Sendeleistungspegels (ZSLP1; ZSLP2) mit der zu diesem Zeitpunkt vorliegenden Qualität (Q) des Übertragungskanals (5) eine Richtung für die Anderung des einzustellenden Sendeleistungspegels (SLP1; SLP2) ermittelt wird.

3. Verfahren nach Anspruch 1 oder 2, **dadurch gekennzeichnet, daß** die Anderung der Qualität (Q) des Übertragungskanals (5) durch Vergleich mindestens zweier Qualitätswerte (Q1, Q2; Q4, Q5) ermittelt wird.

4. Verfahren nach einem der vorherigen Ansprüche, **dadurch gekennzeichnet, daß** die Differenz (D1; D2) zwischen dem einzustellenden Sendeleistungspegel (SLP1; SLP2) und dem zuletzt gewählten Sendeleistungspegel (ZSLP1; ZSLP2) umso kleiner gewählt wird, je häufiger sich die Richtung der Leistungsregelung ändert.

5. Verfahren nach einem der vorherigen Ansprüche, **dadurch gekennzeichnet, daß** die Differenz (D1; D2) zwischen dem einzustellenden Sendeleistungspegel (SLP1; SLP2) und dem zuletzt gewählten Sendeleistungspegel (ZSLP1; ZSLP2) umso größer gewählt wird, Je seltener sich die Richtung der - Leistungsregelung ändert.

6. Vorrichtung (15, 50) zur Durchführung eines Verfahrens nach einem der vorherigen Ansprüche, wobei ein Modul (50) zur Leistungsregelung eines Senders (1) und ein Modul (15) zur Leistungsregelungsparameterbestimmung zur Einstellung des Sendeleistungspegels (SLP1; SLP2) des Senders (1) in Abhängigkeit der Qualität (Q) eines bestehenden Übertragungskanals (5) und des für die Übertragung in diesem Übertragungskanal (5) zuletzt gewählten Sendeleistungspegels (ZSLP1; ZSLP2) vorgesehen sind, wobei Differenzfestlegungsmittel (40) zur Bildung der Differenz (D1; D2) zwischen dem einzustellenden Sendeleistungspegel (SLP1; SLP2) und dem zuletzt gewählten Sendeleistungspegel (ZSLP1; ZSLP2) in Anhängigkeit der Änderung der Qualität (Q) des Übertragungskanals (5) vorgesehen sind, **dadurch gekennzeichnet, daß** zumindest die Differenz (D1; D2) zwischen dem aktuell einzustellenden Sendeleistungspegel (SLP1; SLP2) und dem zuletzt gewählten Sendeleistungspegel (ZSLP1; ZSLP2) nach einer Änderung der Richtung der Leistungsregelung gegenüber der zuvor gewählten Differenz vergrößert wird, wenn sich die Richtung der Leistungsregelung zuvor für eine vorgegebene Zeit nicht geändert hat, und umso größer gewählt wird, je länger die vorgegebene Zeit ist.

7. Vorrichtung (15, 50) nach Anspruch 6, **dadurch gekennzeichnet, dass** das Modul (50) zur Leistungsregelung im Sender (1) und das Modul (15) zur Leistungsregelungsparameterbestimmung in einem Empfänger (10) angeordnet ist, wobei der Empfänger (10) eine Senke des Übertragungskanals (5) bildet.

8. Vorrichtung (15, 50) nach Anspruch 6, **dadurch gekennzeichnet, daß** das Modul (50) zur Leistungsregelung und das Modul (15) zur Leistungsregelungsparameterbestimmung im Sender (1) angeordnet sind.

## Claims

1. Method for controlling the power of a transmitter (1) whose transmission power level (SLP1; SLP2) is set as a function of the quality (Q) of an existing transmission channel (5) and of the transmission power level (ZSLP1; ZSLP2) chosen most recently for the transmission on this transmission channel (5), whereby the difference (D1; D2) between the transmission power level (SLP1; SLP2) to be set and the most recently chosen transmission power level (ZSLP1; ZSLP2) is formed as a function of the change in the quality (Q) of the transmission channel (5), **characterized in that** at least the difference (D1; D2) between the transmission power level (SLP1; SLP2) to be set at that time and the most recently chosen transmission power level (ZSLP1; ZSLP2) is increased after a change in the direction of the power control compared to the previously chosen difference if the direction of the power control has not previously changed for a predetermined time, and is chosen to be greater the longer the predetermined time.

2. Method according to Claim 1, **characterized in that** a direction for changing the transmission power level (SLP1; SLP2) to be set is determined from a comparison of the transmission power level (ZSLP1; ZSLP2) most recently chosen for a first previous time (t1Z1; t2Z1) with the quality (Q) at this time of the transmission channel (5).

3. Method according to Claim 1 or 2, **characterized in that** the change in the quality (Q) of the transmission channel (5) is determined by comparison of at least two quality values (Q1, Q2; Q4, Q5).

4. Method according to one of the preceding claims, **characterized in that** the difference (D1; D2) between the transmission power level (SLP1; SLP2) to be set and the most recently chosen transmission power level (ZSLP1; ZSLP2) is chosen to be lower the more frequently the direction of the power control changes.

5. Method according to one of the preceding claims, **characterized in that** the difference (D1; D2) between the transmission power level (SLP1; SLP2) to be set and the most recently chosen transmission power level (ZSLP1; ZSLP2) is chosen to be greater the more rarely the direction of the power control changes.

6. Apparatus (15, 50) for carrying out a method according to one of the preceding claims, with a module (50) being provided for power control of a transmitter (1), and a module (15) being provided for determination of the power control parameters in order to set the transmission power level (SLP1; SLP2) of the transmitter (1) as a function of the quality (Q) of an existing transmission channel (5) and of the most recently chosen transmission power level (ZSLP1; ZSLP2) for transmission in this transmission channel (5), whereby difference definition means (40) are provided in order to form the difference (D1; D2) between the transmission power level (SLP1; SLP2) to be set and the most recently chosen transmission power level (ZSLP1; ZSLP2) as a function of the change in the quality (Q) of the transmission channel (5), **characterized in that** at least the difference (D1; D2) between the transmission power level (SLP1; SLP2) to be set at that time and the most recently chosen transmission power level (ZSLP1; ZSLP2) is increased after a change in the direction of the power control compared to the previously chosen difference if the direction of the power control has not previously changed for a predetermined time, and is chosen to be greater the longer the predetermined time.

7. Apparatus (15, 50) according to Claim 6, **characterized in that** the module (50) for power control is arranged in the transmitter (1), and the module (15) for determination of the power control parameters is arranged in a receiver (10), with the receiver (10) forming a sink for the transmission channel (5).

8. Apparatus (15, 50) according to Claim 6, **characterized in that** the module (50) for power control and the module (15) for determination of the power control parameters are arranged in the transmitter (1).

## Revendications

1. Procédé de régulation de la puissance d'un émetteur (1) dont le niveau de puissance d'émission (SLP1; SLP2) est réglé en fonction de la qualité (Q) d'un canal de transmission (5) existant et du niveau de puissance d'émission (ZSLP1; ZSLP2) choisi finalement pour la transmission dans ce canal (5),
par lequel
la différence (D1, D2) entre le niveau de puissance d'émission à régler (SLP1; SLP2) et le niveau de puissance d'émission choisi finalement (ZSLP1; ZSLP2), est formée en fonction de la variation de la qualité (Q) du canal de transmission (5),
**caractérisé en ce que**
au moins la différence (D1; D2) entre le niveau de puissance d'émission à régler actuellement (SLP1; SLP2) et le niveau de puissance d'émission choisi finalement (ZSLP1; ZSLP2) est augmentée après une variation du sens de réglage de la puissance par rapport à la différence sélectionnée précédemment, si ce sens n'a pas changé précédemment pendant une durée prédéfinie, et est choisie d'autant plus grande que la durée prédéfinie est plus longue.

2. Procédé de régulation selon la revendication 1,
**caractérisé en ce que**
le sens de la variation du niveau de la puissance d'émission (SLP1; SLP2) à régler, est déterminé à partir d'une comparaison entre le niveau de puissance d'émission (ZSLP1; ZSLP2) choisi finalement à un premier instant passé (t1Z1; t2Z1) et la qualité (Q) du canal de transmission existant à ce même instant.

3. Procédé de régulation selon la revendication 1 ou 2,
**caractérisé en ce que**
la variation de la qualité (Q) du canal de transmission (5) est établie par comparaison d'au moins deux valeurs de qualité (Q1, Q2; Q4, Q5).

4. Procédé de régulation selon une des revendications précédentes,
**caractérisé en ce que**
la différence (D1; D2) entre le niveau de puissance d'émission à régler (SLP1; SLP2) et le niveau de puissance d'émission choisi finalement (ZSLP1; ZSLP2) est choisie d'autant plus petite que le sens de réglage de la puissance change plus souvent.

5. Procédé de régulation selon une des revendications précédentes,
**caractérisé en ce que**
la différence (D1; D2) entre le niveau de puissance d'émission à régler (SLP1; SLP2) et le niveau de puissance d'émission choisi finalement (ZSLP1; ZSLP2) est choisie d'autant plus grande que le sens de réglage de la puissance change plus rarement.

6. Dispositif (15, 50) pour la mise en oeuvre d'un procédé selon une des revendications précédentes, dans lequel sont prévus un module (50) pour réguler la puissance d'un émetteur (1) et un module (15) pour déterminer les paramètres de régulation de puissance, afin de régler le niveau de puissance d'émission (SLP1; SLP2) de l'émetteur (1) en fonction de la qualité (Q) d'un canal de transmission existant (5) et du niveau de puissance d'émission (ZSLP1; ZSLP2) finalement choisi pour la transmission dans ce canal (5),
par lequel
des moyens de détermination de différence (40) sont prévus pour déterminer la différence (D1; D2) entre les niveaux de puissance d'émission à régler (SLP1; SLP2) et le niveau de puissance d'émission finalement choisi (ZSLP1; ZSLP2), en fonction de la variation de la qualité (Q) du canal de transmission (5),
**caractérisé en ce que**
au moins la différence (D1; D2) entre le niveau de puissance d'émission à régler actuellement (SLP1; SLP2) et le niveau de puissance d'émission choisi finalement (ZSLP1; ZSLP2) est augmentée après une variation du sens de réglage de la puissance par rapport à la différence sélectionnée précédemment, si ce sens n'a pas changé précédemment pendant une durée prédéfinie, et est choisie d'autant plus grande que la durée prédéfinie est plus longue.

7. Dispositif (15, 50) selon la revendication 6,
**caractérisé en ce que**
le module (50) de régulation de puissance est monté dans l'émetteur (1) et le module (15) de détermination des paramètres de régulation de puissance est monté dans un récepteur (10) qui constitue une source négative du canal de transmission.

8. Dispositif (15, 50) selon la revendication 6,
**caractérisé en ce que**
le module (50) de régulation de puissance et le module (15) de détermination des paramètres de régulation de puissance sont montés dans l'émetteur (1).
